Europäisches Patentamt

European Patent Office

Office européen des brevets

(11) Veröffentlichungsnummer: **0 350 607**
**A2**

## (12) EUROPÄISCHE PATENTANMELDUNG

(21) Anmeldenummer: 89109562.2

(22) Anmeldetag: 26.05.89

(51) Int. Cl.⁴ **A21D 2/02** , **C01B 25/42**

(30) Priorität: **14.06.88 DE 3820198**

(43) Veröffentlichungstag der Anmeldung:
**17.01.90 Patentblatt 90/03**

(84) Benannte Vertragsstaaten:
**AT BE CH DE ES FR GB GR IT LI LU NL SE**

(71) Anmelder: **Benckiser-Knapsack GmbH**
**Dr. Albert-Reimann-Strasse 2**
**D-6802 Ladenburg(DE)**

(72) Erfinder: **Ehret, Werner**
**Schlossstrasse 20**
**D-6901 Wilhelmsfeld(DE)**
Erfinder: **Fischer, Jutta**
**Im Gehklingen 37**
**D-6149 Rimbach(DE)**
Erfinder: **Gitzing, Roland, Dr.**
**Sackgasse 4**
**D-6944 Hemsbach(DE)**
Erfinder: **Koch, Wilhelm, Dr.**
**Im hinteren Reck 12**
**D-6802 Ladenburg(DE)**
Erfinder: **Maurer, Andrea, Dr.**
**Siegfriedstrasse 14**
**D-6940 Weinhein(DE)**
Erfinder: **Tänzler, Richard, Dr.**
**Grundelbachstrasse 112c**
**D-6940 Weinheim(DE)**

(74) Vertreter: **Grussdorf, Jürgen, Dr. et al**
**Patentanwälte Zellentin & Partner**
**Rubensstrasse 30**
**D-6700 Ludwigshafen(DE)**

(54) Verwendung von Calciumdihydrogendiphosphat als Backtriebsäure für langsam reagierende Triebsysteme und Verfahren zu seiner Herstellung.

(57) Verwendung von Calciumdihydrogendiphosphat mit einem Gehalt von mindestens 95 % und Bicarbonat als Backtriebmittel zur Herstellung lagerfähiger, gefrorener Teige und Verfahren zur Herstellung des Calciumdihydrogendiphosphats durch Dehydratisieren dünner Schichten von Calciumdiydrogenphosphat in einem geschlossenen Reaktor.

EP 0 350 607 A2

EP 0 350 607 A2

## Verwendung von Calciumdihydrogendiphosphat als Backtriebsäure für langsam reagierende Triebsysteme und Verfahren zu seiner Herstellung.

In der Backtechnik haben neben den bekannten Triebmitteln Backhefe und Sauerteig die chemischen Teiglockerungsmittel zentrale Bedeutung. Als optimal hat sich die Freisetzung von Kohlendioxid aus löslichen Carbonaten, insbesondere Natriumbicarbonat, durch Einwirkung von Stoffen, welche in wäßriger Lösung Protonen freisetzen, erwiesen.

Stoffe dieser Art, üblicherweise als Backtriebsäuren oder Triebsäuren bezeichnet, sind neben organischen Genußsäuren wie Weinsäure, Zitronensäure, Gluconsäurelacton oder Milchsäure und ihren sauren Salzen, vorzugsweise teilneutralisierte Salze der Ortho-und Diphosphorsäure (Pyrophosphorsäure). Durch Art und Menge der gebundenen Kationen können die Abgabe von Protonen in Teigsystemen und damit der zeitliche Ablauf der Kohlendioxidbildung beeinflußt werden.

Zur Bewertung von Backtriebsäuren hinsichtlich der zeitabhängigen Kohlendioxidfreisetzung dient die Reaktionsrate (ROR-Wert, Rate of Reaction) (Parks, I.R., Avrom, R. et al.: Methods for Measuring Reactivity of Chemical Leavening Systems: I. Dough Rate of Reaktion; Cereal Chem. 37, 1960, S. 503ff). Sie entspricht dem nach acht Minuten unter standardisierten Bedingungen freigesetzten Prozentanteil, an dem in einem Backtriebsystem gebundenen Gesamtkohlendioxid.

In letzter Zeit haben neben den Standardbackprodukten, die im Haushalt oder Gewerbebetrieb nach Fertigstellung des Teigs unmittelbar ausgebacken werden, auch solche Backwaren größere Bedeutung erhalten, bei denen der Fertigteig entweder im Verlauf des Verarbeitungsprozesses selbst oder im Rahmen des Vertriebsweges bis zur Verwertung durch Weiterverarbeiter oder den Endverbraucher gekühlt oder gefroren längere Zeit aufbewahrt wird. Beispiele für Produkte des beschriebenen Vertriebweges sind backfertige Pizzateige, backfertige Flachteige für Hüll- und Einschlagzwecke ("Loempia") oder geforene Teige in gasdicht verschlossenen Dosen. Teige dieser Art sollen unter Kühl- oder Gefrierbedingungen ohne Verlust an Triebstärke gegebenenfalls über mehrere Monate aufzubewahren sein.

In diesen Produkten verwendete Triebmittel dürfen deshalb trotz des im Teig enthaltenen Wassers bei der Herstellungs- und Lagerungstemperatur (20 °C bzw. -20° bis + 0°C) kein oder nur sehr wenig Treibgas freisetzen, während bei üblichen Backtemperaturen das Treibgas möglichst rasch, vollständig und in kleinen Bläschen freigesetzt wird, um die Krume optimal zu lockern und aufzutreiben, ohne sie jedoch durch Risse oder größere Blasen zu zerstören.

Für diese Anwendung werden bisher Natriumaluminiumphosphate der ungefähren Zusammensetzung $NaAl_3H_{14}(PO_4)_8 \times 4H_2O$ als Backtriebsäuren ausschließlich verwendet, soweit hierzu gesetzliche Verwendungserlaubnis besteht. Nach bisheriger Kenntnis hatte nur diese Triebsäure auf Grund ihrer schlechten Wasserlöslichkeit eine Reaktionsrate von ca. 20, welche als Vorbedingung für die Anwendung in Fertigteigen angesehen wird. Die Verwendung von Natriumaluminiumphosphat wird jedoch beeinträchtigt durch seine Hygroskopizität, die darauf zurückzuführende Neigung zum Zusammenbacken und insbesondere das unbefriedigende Fließverhalten in mechanischen Transportsystemen. Dem wurde versucht, durch z.B. Dehydratisieren (US-Patent Nr. 2,957,750) oder durch Veränderung von Kornstrukturen (US-Patent Nr. 2,995,421) entgegenzuwirken, ohne daß sich das Verhalten von Natriumaluminiumphosphat grundlegend ändern läßt.

Von besonderer Bedeutung ist der Umstand, daß nach neuerer Erkenntnis eine Einflußnahme von Aluminium auf das Entstehen bestimmter Erkrankungen des Zentralnervensystems nicht auszuschließen ist. Wenngleich die bisherigen Erkenntnisse hierzu weiterer Untersuchungen bedürfen, ist dennoch von weiter bestehenden gesetzlichen Anwendungsverboten innerhalb der meisten EG-Staaten auszugehen.

Es bestand daher ein Bedürfnis, das Natriumaluminiumphosphat als Backtriebsäure für Fertigteige durch technologisch analog reagierende, physiologisch unbedenkliche Substanzen zu ersetzen.

Überraschenderweise hat sich Calciumdihydrogendiphosphat (saures Calciumpyrophosphat) als für diesen Zweck hervorragend geeignet erwiesen. Es war bereits seit langem bekannt, daß saure Alkali-und Erdalkalipyrophosphate als Backtriebsäuren verwendet werden können, um in Teigen Kohlendioxid aus Alkalicarbonaten freizusetzen (DE-P 30 26 672). Aufgrund der hohen Reaktionsrate (30-50) solcher Verbindungen wurden diese nur als Backtriebsäure für "Backpulver" eingesetzt, die für Teige zur sofortigen Verarbeitung bestimmt sind.

Für die oben genannten Gefrierteigsorten ist eine derart hohe Reaktionsrate jedoch nicht geeignet.

Es wurde nun gefunden, daß Calciumdihydrogendiphosphat, welches besonderen Reinheitsanforderungen genügt, auf Natriumbicarbonat in einer Form einwirkt, daß die für die beschriebenen Anwendungszwecke erforderliche Reaktionsrate von ca. 20 erreicht wird und auch bezüglich aller anderen Voraussetzungen geeignet ist, die Aluminiumphosphate als Backtriebsäuren zu ersetzen.

2

Es ist aus der DE-P 41 00 98 bekannt, 2 Mol primäres Ammoniumphosphat mit neutralem Metallpyrophosphat zu sauren Pyrophosphaten umzusetzen (Glg. 1). Ebenso ist eine Umsetzung von sekundären Orthophosphaten mit 1 Mol Ammoniumphosphat möglich (Glg.2).

$$Me_4P_2O_7 + 2 NH_4H_2PO_4 \longrightarrow 2 Me_2H_2P_2O_7 + 2 NH_3 + H_2O \quad (Glg.1)$$
$$Me_2PO_4 + NH_4H_2PO_4 \longrightarrow Me_2H_2P_2O_7 + NH_3 + H_2O \quad (Glg.2)$$

Aus der DE-P 30 26 72 ist bekannt, 2 Mol Ammoniumphosphat mit 1 Mol Carbonat zum Pyrophosphat umzusetzen.

$$2(NH_4)H_2PO_4 + Me_2CO_3 \longrightarrow Me_2H_2P_2O_7 + 2H_2O + 2NH_3 + CO_2 \quad (Glg.3)$$

Die Reaktion verläuft in 2 Stufen zunächst unter Austritt von Ammoniak und Kohlendioxid zum Orthophosphat und anschließend bei weiter erhöhter Temperatur unter Wasserabspaltung zum Pyrophosphat. Die Umsetzung von Monocalciumphosphat zum Calciumdihydrogendiphosphat ist intensiv von Hill (Ind. Eng. Chem. 39 (1947), 12, 1667-1672) untersucht worden. Danach zeigt sich, daß selbst bei Einsatz von nur geringen Mengen (20-100 g) in dünner Schicht und bei genauer Kontrolle der Aufheizbedingungen diese pyrolytische Abspaltung von Wasser zum sauren Pyrophosphat nur unvollständig abläuft, d.h. im Endprodukt auch nach längerer Reaktionszeit noch bis zu 10 oder 20 % Orthophosphat enthalten sein kann, und andererseits "amorphe" Produkte gebildet werden, welche sich analytisch als Metaphosphate und Polyphosphate erweisen, was auf eine erhebliche Überreaktion hinweist. Eine verbesserte Reaktion läßt sich durch Überleiten von Wasserdampf erreichen, jedoch auch unter diesen Bedingungen wird noch "amorphes" Produkt gebildet und das Endprodukt ist nicht feinpulvrig, sondern fällt in verbackten Klumpen an. Ungezielte Reaktion und Verklumpung werden noch verstärkt, wenn von einem kristallwasserhaltigen Orthophosphat ausgegangen wird und das Kristallwasser nicht zunächst bei Temperaturen von ca. 150-180°C langsam entfernt wird. Für technologische Prozesse ist dieses Verfahren daher ungeeignet.

Die vorerwähnten Umsetzungen mit Ammoniumphosphat erweisen sich im technischen Prozeß ebenfalls als ungeeignet, da neben einer Verunreinigung durch Reste der Ammoniumsalze bzw. Carbonate auch bei diesen Prozessen in größerer Menge neben stärker sauren Orthophosphaten bereits Metaphosphate und Polyphosphate gebildet werden, die die Verwendung solcher Produkte als Backtriebsäuren im Lebensmittelbereich behindern.

Aufgabe der vorliegenden Erfindung ist es daher auch, ein Verfahren zur Herstellung eines reinen Calciumdihydrogenpyrophosphates bereitszustellen, das als Backtriebsäure verwendet werden kann.

Das erfindungsgemäße Verfahren besteht in der Kondensation von Monocalciumphosphat und/oder Monocalciumphosphatmonohydrat zu Calciumdihydrogenpyrophosphat in einem Reaktor unter Wärmezufuhr, wobei das Ausgangsmaterial in einem Reaktor in dünner Schicht an die auf 255-330°C erhitzte Reaktorwandung gedrückt wird und die erhitzte Schicht sofort wieder von der Wandung gelöst und mit dem übrigen Reaktionsmaterial vermischt wird. Der Reaktor ist dabei abgedichtet, so daß ein Gasaustausch mit der Umgebung unterbunden ist und das Reaktionsprodukt in der Dampfatmosphäre des gebildeten Reaktionswassers hergestellt wird.

Die Wärmeübertragung geschieht von außen über die Reaktorwandung z.B. mittels eines Temperiermediums wie Thermoöl, Metallschmelzen oder Salzschmelzen, wobei die Temperaturführung in engen Grenzen geregelt werden muß. Vorzugsweise wird dabei eine Vorrichtung gemäß DE-A 29 07 453 verwendet. Der Reaktor ist dabei so abgeändert, daß ein Gasaustausch mit der Umgebung unterbunden ist und das Reaktionsprodukt in der Dampfatmosphäre des gebildeten Reaktionswassers hergestellt wird.

Neben dem Hauptzweck, der Herstellung von reinem Calciumpyrophosphat, sind Vorteile dieser Reaktionsführung die Einsparungen von zuzuführendem Wasserdampf und Heizenergie, sowie eine Vermeidung von Umweltbelastungen durch abzuführende staubhaltige Brüdendämpfe.

Als Rohstoffe kommen kommerziell erhältliche reine Monocalciumphospate und/oder Monocalciumphosphatmonohydrate mit einem Restwassergehalt von 0,1 bis 5,0 % (Trockenverlust), vorzugsweise 1,0 bis 3,0 % zur Anwendung. Diese weisen pH-Werte (1 %ig in Wasser) von 3,8 bis 4,0 auf und verlieren beim Glühen auf 800°C 15,4 +/-0,3 % Wasser bzw. 21,4 +/- 0,3 % für Monocalciumphosphatmonohydrat innerhalb einer Stunde. Das molare Ca/P-Verhältnis sollte im Bereich von 0,40 bis 0,60 liegen, vorzugsweise im Bereich von 0,45 bis 0,55. Für das kontinuierliche Produktionsverfahren ist ein Monocalciumphosphat und/oder Monocalciumphosphatmonohydrat mit einer mittleren Korngröße kleiner 1000 $\mu$m, und insbesondere einem $D_{50}$ zwischen 50$\mu$m und 500$\mu$m vorteilhaft, um einen gleichmäßigen Transport des Produktes durch den Reaktor zu gewährleisten.

Die Identität des Ausgangsmaterials wird mittels Röntgendiffraktogramm bestätigt. Zur Verfolgung der Reaktionen

$$Ca(H_2PO_4)_2 \longrightarrow CaH_2P_2O_7 + H_2O$$
$$Ca(H_2PO_4)_2 \times H_2O \longrightarrow CaH_2P_2O_7 + 2 H_2O$$

bis zu vollständigem Umsatz dient ebenfalls die Röntgendiffraktometrie, man nutzt dabei das Verschwinden der charakteristischen Beugungspeaks der Edukte und das Entstehen der typischen Beugungspeaks des Produktes (Röntgenstrahlung Cu K-alpha-1, Wellenlänge 1,5405 Angstroem).

Röntgenreflexe, Winkel-Grad ($^\circ$) und Netzebenenabstand (Angstroem):

| $Ca(H_2PO_4)_2$ | $Ca(H_2PO_4)_2 \times H_2O$ | $CaH_2P_2O_7$ |
|---|---|---|
| $24,5^\circ$ = 3,63 A | $22,8^\circ$ = 3,90 A | $20,0^\circ$ = 4,45 A |
| $25,6^\circ$ = 3,48 A | $24,0^\circ$ = 3,70 A | $23,6^\circ$ = 3,76 A |
| $28,0^\circ$ = 3,19 A | $30,2^\circ$ = 2,96 A | $26,6^\circ$ = 3,35 A |
| $29,3^\circ$ = 3,05 A | $33,4^\circ$ = 2,68 A | $28,0^\circ$ = 3,18 A |
| $30,3^\circ$ = 2,95 A | | |
| $34,7^\circ$ = 2,58 A | | |

Der Anstieg des Signals bei $23,6^\circ$ ist maßgebend für einen vollständigen Umsatz.

Als weiteres, sehr einfaches Indiz für den Verlauf der Reaktion wird der Glühverlust des Produktmaterials gemessen, jedoch ist das Abfallen der Glühverluste von 15,4 bzw. 21,4 % für das Monoydrat auf den theoretischen Wert von 8,3 % für das Calciumdihydrogenpyrophosphat nur eine notwendige, nicht aber hinreichende Bedingung für die Reinheit des Produktes, da eine unvollständige Umsetzung das Vorhandensein von Metaphosphatanteilen nicht ausschließt.

Überraschenderweise konnte ein nach Dünnschichtanalyse und Ionenchromatographie reines Produkt nach diesem Verfahren erhalten werden, welches nicht verklumpt ist, sondern als verwendungsfähiges Pulver mit Korngrößen ca. 80 % von 40 μm bis 200 μm anfällt. Man muß dazu die Reaktionstemperatur so einstellen, daß eine Produkttemperatur unter diskontinuierlicher Verfahrensweise im Temperaturbereich zwischen $230^\circ$ und $275^\circ$ C, vorzugsweise $240^\circ$ und $260^\circ$ C bei einer Verweilzeit von einer Stunde eingestellt wird. Bei kontinuierlicher Reaktionsführung liegt der Temperaturbereich aufgrund der Wärmeabfuhr durch das Produkt für die Reaktorwand zwischen $255^\circ$ und $330^\circ$ C, vorzugsweise $265^\circ$ und $300^\circ$ C bei einer Verweilzeit von zwei Stunden.

Bei anderen Verweilzeiten und/oder anderen Temperaturen erfolgt entweder Weiterreaktion zu höher kondensierten Produkten oder eine unvollständige Umsetzung, gegebenenfalls beides.

Bei statischen Herstellungsversuchen im Ofen ohne mechanische Durchmischung des Reaktionsmaterials erhält man stark verklumpte Produkte.

Versuchsbeschreibung

In einen vortemperierten Doppelmantellaborkneter mit vier Liter Fassungsvermögen, mit Temperaturfühler für Produkt-und Dampfraumtemperatur sowie mit einem Kondensatabgangstutzen wird Monocalciumphosphat und/oder Monocalciumphosphatmonohydrat eingefüllt. Die Dampfraumtemperatur und die Produkttemperatur werden aufgezeichnet. Während der Umsetzung werden in bestimmten regelmäßigen Zeitabständen Proben entnommen und auf ihre Reinheit dünnschicht-und ionenchromatographisch untersucht. Durch einen separaten Stutzen ist eine Zudosierung von Dampf möglich (Mengenbestimmung durch Gewichtsverlust von Wasser und Gegenwägung des kondensierten Wasserdampfaustrages). Nach Ablauf der Reaktion wird das Produkt aus dem Kneter entnommen, auf Raumtemperatur abgekühlt und analysiert.

Während der Reaktion wird beobachtet, daß sich das Volumen des Ausgangsmaterials nach 15 Minuten um etwa 40 % ausdehnt, um nach 45-60 Minuten wieder sein Ausgangsvolumen einzunehmen.

Neben Ionenchromatographie wurde auch mittels Dünnschichtchromatographie auf Ortho-, Pyro- und Meta-Phosphatgehalt geprüft. Die vollständige Umsetzung wird im Röntgendiffraktogramm, durch Fehlen von Orthophosphat im Ionen- und Dünnschichtchromatogramm sowie durch Übereinstimmung der gemessenen mit den berechneten Glühverlusten nachgewiesen.

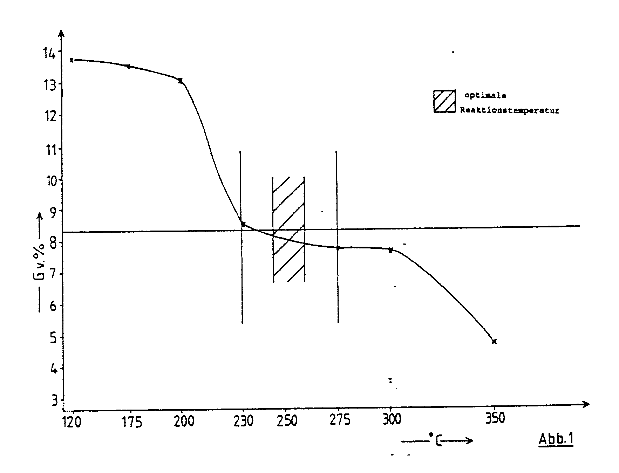

Zur Bestimmung des optimalen Temperaturintervalls wurden die Zeiten bis zur vollständigen Umsetzung bei verschiedenen konstanten Temperaturen ohne Dampf- oder Wasserzugabe gemessen (siehe Abb. 1: Glühverlust/Temperatur im diskontinuierlichen Verfahren).

Unter den Bedingungen der diskontinuierlichen Verfahrensweise ergibt sich das optimale Temperaturintervall zwischen $240^\circ$ und $260^\circ$ C. Im kontinuierlichen Verfahren liegt es zwischen $265^\circ$ und $300^\circ$ C. Nur bei der vorzugsweise einzuhaltenden Temperatur erhält man Ausbeuten von 95-99,9 % der Theorie.

Bei zu niedrigen Kondensationstemperaturen wird der theoretische Wert von 8,33 % aufgrund von Restgehalten an Orthophosphaten überschritten, bei Übertrocknung durch Bildung von Metaphosphaten

4

unterschritten. Glühverluste von 8,20-8,45 % erhält man bei der erfindungsgemäß einzuhaltenden Temperatur.

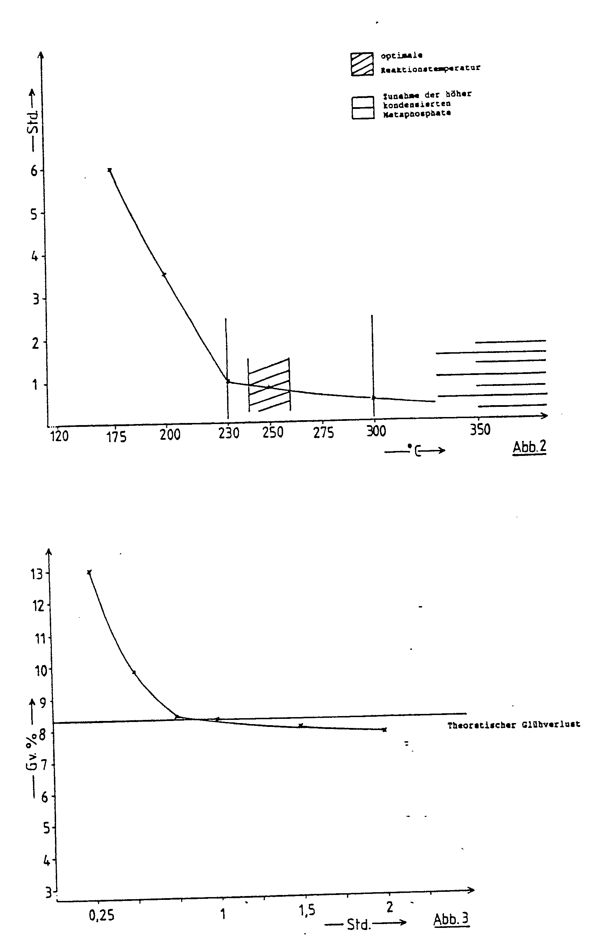

Die Versuche zur Ermittlung der Reaktionszeit beim diskontinuierlichen Verfahren bis zur vollständigen Umsetzung ergeben ein Optimum bezüglich Dauer und Temperatur im vorzugsweise einzuhaltenden Temperaturbereich (siehe Abb. 2: Reaktionsdauer/Temperatur). Weiterhin wurden zur Bestimmung der optimalen Reaktionsdauer im idealen Temperaturbereich zu verschiedenen Zeiten die Zusammensetzungen des Reaktionsproduktes ermittelt (siehe Abb. 3: Glühverlust/Reaktionsdauer).

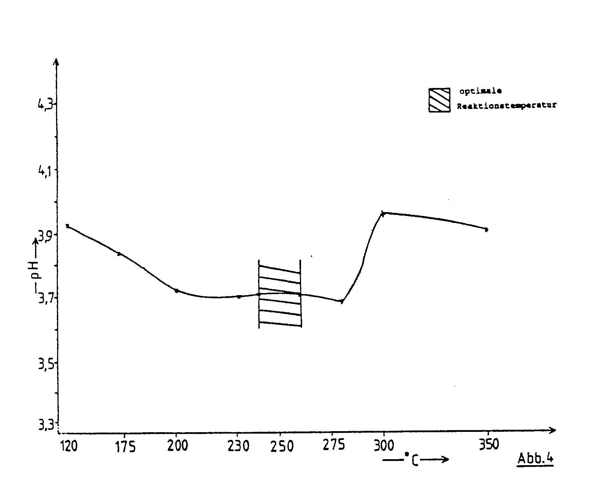

Saure Pyrophosphate zeigen niedrigere pH-Werte als die zugehörigen primären Orthophosphate und die höher kondensierten Meta- oder Polyphosphate. So ist auch hier ein Abfallen des pH-Wertes bei der Bildung des Calciumdihydrogenpyrophosphates zu erwarten. Das Minimum des pH-Wertes der Produkte liegt für die reinen Pyrophosphate in dem erfindungsgemäß vorgeschlagenen Temperaturbereich von 240° - 260° C bei diskontinuierlicher Verfahrensweise (siehe Abb. 4: pH-Werte/Temperatur).

1. Statische Versuche (Vergleichsversuch)

Monocalciumphosphat und/oder Monocalciumphosphatmonohydrat wird in einem erhitzten Muffelofen in Wasserdampfatmosphäre auf einer Porzellanschale über mehrere Stunden erhitzt. Anschließend wird das Material im Mörser zerkleinert, durchmischt und an der Luft abgekühlt; pH-Wert (1%ig in Wasser), Glühverlust, Ca/P-Verhältnis, Gehalt an Pyrophosphat sowie die Reaktionsrate (ROR-Wert) werden ermittelt. Reaktionsparameter und Analysenergebnisse siehe Tab. 1.

2. Versuche im Laborkneter

In einem vortemperierten Doppelmantellaborkneter mit vier Liter Fassungsvermögen, mit Temperaturfühler für Produkt- und Dampfraumtemperatur sowie mit einem Kondensatabgangstutzen wird Monocalciumphosphat und/oder Monocalciumphosphatmonohydrat eingefüllt. Die Dampfraumtemperatur und die Produkttemperatur werden aufgezeichnet. Während der Umsetzung werden in bestimmten regelmäßigen Zeitabständen Proben entnommen und auf ihre Reinheit dühnschicht-und ionenchromatographisch untersucht. Durch einen separaten Stutzen ist eine Zudosierung von Dampf möglich (Mengenbestimmung durch Gewichtsverlust von Wasser und Gegenwägung des kondensierten Wasserdampfaustrages). Es kann auch Wasser während der Reaktion zugegeben werden. Nach Ablauf der Reaktion wird das Produkt aus dem Kneter entnommen und auf Raumtemperatur abgekühlt und wie unter 1. analysiert. Reaktionsparameter und Analysenergebnisse siehe Tabelle 2.

3. Produktionsversuche

In einer temperierbaren Kneteranlage entsprechend DE-A 29 07 453 wird Monocalciumphosphat und/oder Monocalciumphosphatmonohydrat kontinuierlich zugeführt. Das Reaktionsmaterial wird während der Umsetzung durchmischt und kontinuierlich ausgetragen. Der Dampfraum der Kneteranlage ist gegenüber der Umgebung abgedichtet und zusätzlich mit einer Vorrichtung zur Dosierung von Wasserdampf ausgestattet. Das unter den verschiedenen Reaktionsparametern ausgetragene Produkt wird wie unter 1. analysiert. Reaktionsparameter und Analysenergebnisse siehe Tabelle 3.

Calciumdihydrogendiphosphat, sauer, als Backtriebsäure für tiefgefrorene Teige am Beispiel von tiefgefrorenen Teigböden

Für den Teig wurde folgende Rezeptur verwandt:
500 g Weizenmehl, Type 405
15 g Backpulver
2,5g Kochsalz
250 g Wasser
1 EL Öl

Bei den Versuchen wurden die backtechnischen Eigenschaften der Backtriebsäure - Calciumdihydrogendiphosphat, sauer - verglichen mit den backtechnischen Eigenschaften der Backtriebsäuren Dinatrium-

dihydrogendiphosphat ($Na_2H_2P_2O_7$) normal reagierend und reaktionsverzögert, sowie Natriumaluminium-phosphat $NaH_{14}Al_3(PO_4)_8 \times 4H_2O$.

Sie wurden dabei wie folgt eingesetzt:

EP 0 350 607 A2

| Natrium-hydrogencarbonat [NaHCO$_3$] 33,5 g | Reaktionsrate (ROR) | Dosierung im Backpulver | Dosierung Backpulver auf d.Teig | Dosierung d. Triebsäure auf Mehl |
|---|---|---|---|---|
| Dinatriumdihydrogendiphosphat normal reag. [Na$_2$H$_2$P$_2$O$_7$] | 48-50 | 44,5 g | 15 g | 6,7 g |
| Dinatriumdihydrogendiphosphat reaktionsverzögert [Na$_2$H$_2$P$_2$O$_7$] | 30-32 | 44,5 g | 15 g | 6,7 g |
| Natriumaluminiumphosphat [NaH$_{14}$Al$_3$(PO$_4$)$_8$ x 4 H$_2$O] | 19-21 | 33,0 g | 15 g | 4,9 g |
| Calciumdihydrogendiphosphat [CaH$_2$P$_2$O$_7$] (erfindungsgemäß) | 19-21 | 47,0 g | 15 g | 7,0 g |
| Calciumdihydrogendiphosphat mit Gehalten an Calciumorthophosphat + Metaphosphat | 27-30 | 47,0 g | 15 g | 7,0 g |

Pro Backpulver wurde ein Teigansatz von 1.000 g Weizenmehl wie folgt zubereitet:

Das mit Backpulver und 5 g Kochsalz gesiebte Mehl wird unter Zugabe von 500 g Wasser und 40 g Öl mit 300 Knetvorgängen zu einem glatten Teig verarbeitet. Nach einer fünfminütigen Ruhezeit werden die Teige in Portionen à 200 g zerteilt und anschließend zu Teigfladen mit einem Durchmesser von 20 cm ausgerollt. Diese Teigfladen werden bei -25 °C tiefgefroren. Die Verweilzeit in der Tiefkühltruhe beträgt 1 Woche bis 6 Monate.

Das Aufbacken der tiefgefrorenen Teigfladen erfolgt in einem Haushaltselektroherd bei 210 °C und einer Backdauer von 25 Minuten. Die Ergebnisse sind in Tabelle 4 zusammengefaßt.

Beurteilt wurden die aufgebackenen Teigfladen nach den Kriterien:
- Oberflächenbeschaffenheit
- Krumenbeschaffenheit
- Geschmack.

Bei den Versuchen mit reinem, erfindungsgemäßem Calciumdihydrogendiphosphat als Backtriebsäure in tiefgefrorenen Teigen am Beispiel von tiefgefrorenen Teigböden zeigt der Einsatz eindeutige Vorteile auf, im Vergleich mit den Backtriebsäuren Dinatriumdihydrogendiphosphat, sauer, normal reagierend, sowie dem Dinatriumdihydrogendiphosphat, sauer, reaktionsverzögert und nicht-erfindungsgemäßem Calciumdihydrogendiphosphat gemäß dem Stand der Technik, welches Metaphosphat und Orthophosphat enthält. Die aufgebackenen Teigfladen sind in ihrer Oberflächenbeschaffenheit gleichmäßiger, ihre Krume ist lockerer und besser durchstrukturiert, der Geschmack gut und aromatisch.

Im Vergleich mit Natriumaluminiumphosphat, sauer, zeigt sich, daß das Dicalciumdihydrogendiphosphat dem Natriumaluminiumphosphat als Backtriebsäure in seiner backtechnischen Wirkungsweise gleichkommt, jedoch im Gegensatz zu Natriumaluminiumphosphat toxikologisch unbedenklich ist.

Tabelle 1

| Statische Versuche im Trockenschrank | | | | | | | |
|---|---|---|---|---|---|---|---|
| | Einheit | 1 | 2 | 3 | 4 | 5 | 6 |
| Ausgangsmaterial | | MCP | MCP | MCP | MCP | MCP | MCP*$H_2O$ |
| Einsatzmenge | g | 100 | 100 | 100 | 100 | 100 | 30 |
| Dampfzugabe | | + | - | - | - | - | - |
| Wasserzugabe | g | - | - | 30 | - | - | - |
| Reaktionstemperatur | °C | 270 | 270 | 270 | 300 | 350 | 270 |
| Reaktionszeit | Std. | 2 | 5 | 2 | 1 | 2 | 2 |
| pH- Wert (1 %ig) | | 3,69 | 3,92 | 3,47 | 4,00 | 3,99 | 3,80 |
| Glühverlust | % | 8,25 | 7,8 | 8,15 | 7,7 | 3,6 | 7,5 |
| DC ortho | | + | + | + | + | + | + |
| pyro | | + | + | + | + | + | + |
| meta | | + | + | + | + | + | + |
| IC ortho | % | 1,0 | 1,0 | 2,8 | 0,25 | n.b. | n.b. |
| pyro | | 98,7 | 98,0 | 96,2 | 99,5 | n.b. | n.b. |
| meta | | 0,25 | 1,0 | 1,0 | 0,25 | n.b. | n.b. |
| Diffraktogramm | | + | + | ± | + | - | - |
| CaO : $P_2O_5$- Verh. (molar) | | 0,55 | 0,56 | 0,56 | 0,59 | 0,57 | 0,58 |
| ROR- Wert | | 20,8 | 16,8 | 17,7 | - | - | - |
| Produktkonsistenz | | Plv. | Plv. | Brocken | Plv. | Brocken | Brocken |
| Diffr. + ) = Übereinstimmung mit Spektrum der Reinsubstanz | | | | | | | |
| DC = Dünnschichtchromatographie | | | | | | | |
| IC = Ionenchromatographie | | | | | | | |
| Plv. = Pulver | | | | | | | |

Tabelle 2

| Versuche im Laborkneter | | | 1 | 2 | 3 | 4 | 5 | 6 | 7 | 8 | 9 | 10 | 11 |
|---|---|---|---|---|---|---|---|---|---|---|---|---|---|
| Ausgangsmaterial | | | MCP | MCP | MCP | MCP | MCP | MCP | MCP | MCP | MCP | MCP | MCP * $H_2O$ |
| Einsatzmenge | | g | 1200 | 1200 | 1000 | 1200 | 1200 | 1200 | 1200 | 1200 | 1200 | 1200 | 1200 |
| Dampfzugabe | | | + | + | - | - | - | - | - | - | - | - | - |
| Wasserzugabe | | g | - | - | 200 | - | - | - | - | - | - | - | - |
| Reaktionstemperaturen | | °C | 270 | 270 | 270 | 200 | 230 | 230 | 255 | 255 | 255 | 255 | 260 |
| Reaktionszeit | | Std | 2 | 5 | 1 | 3 | 2 | 1 | 1 | 0,5 | 1,5 | 2 | 1 |
| pH- Wert (1 %ig) | | | 3,64 | 3,57 | 3,69 | 3,59 | 3,74 | 3,70 | 3,67 | 3,7 | 3,67 | 3,68 | 3,90 |
| Glühverlust | | % | 7,75 | 7,4 | 6,8 | 9,6 | 8,3 | 8,5 | 8,3 | 9,3 | 8,1 | 7,8 | 7,8 |
| DC | ortho | | + | + | + | n.b. | n.b. | + | + | n.b. | n.b. | n.b. | n.b. |
| | pyro | | + | + | + | | | + | + | | | | |
| | meta | | + | + | + | | | + | + | | | | |
| IC | ortho | % | 2,4 | 1,0 | 0,25 | n.b. | n.b. | 3,1 | 6,6 | n.b. | n.b. | n.b. | n.b. |
| | pyro | | 97,4 | 98,7 | 99,5 | | | 96,7 | 93,3 | | | | |
| | meta | | 0,2 | 0,2 | 0,25 | | | 0,1 | 0,1 | | | | |
| Diffraktogramm | | | + | + | + | - | - | + | + | + | n.b. | n.b. | n.b. |
| CaO / $P_2O_5$- Verh. (molar) | | | 0,56 | 0,54 | n.b. | n.b. | n.b. | 0,56 | 0,57 | n.b. | n.b. | n.b. | n.b. |
| ROR- Wert | | | 21,3 | 18,4 | 20,7 | | | | | | | | |
| Produktkonsistenz | | | Plv. | Plv. | Bro. | Plv. | Plv. | Plv. | Plv. | Plv. | Plv. | Plv. | Brocken |

Tabelle 3

| Versuche mit kontinuierlicher Verfahrensweise | | | | | | |
|---|---|---|---|---|---|---|
| | Einheiten | 1 | 2 | 3 | 4 | 5 |
| Ausgangsmaterial | | MCP | MCP | MCP | MCP | MCP |
| Einsatzmenge | kg/Std. | 200 | 200 | 200 | 200 | 200 |
| Dampfzugabe | | - | - | - | abged.* | + |
| Wasserzugabe | | - | - | - | - | - |
| Reaktionstemperatur | °C | 270 | 280 | 290 | 290 | 320 |
| Verweilzeit | Std. | 2 | 2 | 2 | 2 | 2 |
| pH- Wert (1 %ig) | | 3,5 | 3,45 | 3,35 | 3,65 | 3,7 |
| Glühverlust | % | 12,9 | 10,5 | 10,8 | 8,2 | 7,77 |
| DC ortho | | + | + | + | - | - |
| pyro | | + | + | + | + | + |
| meta | | - | - | - | - | - |
| IC ortho | | | | | | |
| pyro | | | | | | |
| meta | | | | | | |
| Diffraktogramm | | - | - | ± | + | + |
| CaO / $P_2O_5$- Verh. (molar) | | 0,464 | 0,44 | 0,434 | 0,469 | 0,448 |
| ROR- Wert | | 39,2 | 36,3 | 19,2 | 19,5 | 18,7 |
| Produktkonsistenz | | Plv. | Plv. | Plv. | Plv. | Plv. |
| Siebaufriß auf 63μ | % | 60 | 70 | 71 | 70 | 77 |
| Schuettgewicht | g/l | 910 | 860 | 880 | 850 | 850 |

*abged. = Aggregat zusätzlich gegen Dampfverlust abgedichtet

Tabelle 4

| Backtriebsäure | Oberflächenbeschaffenheit | Krumenbeschaffenheit | Geschmack |
|---|---|---|---|
| Dinatriumdihydrogendiphosphat, sauer, $[Na_2H_2P_2O_7]$ normal reagierend | gleichmäßige Bräunung, hohe Wölbung der Oberfläche, knusprig | völlig zerrissene Krume | aromatisch |
| Dinatriumdihydrogendiphosphat, sauer $[Na_2H_2P_2O_7]$ reaktionsverzögert | gleichmäßige Bräunung, gewölbte Oberfläche, knusprig | ungleichmäßige Porung mit größeren Rissen | aromatisch |
| Natriumaluminiumphosphat, sauer, $[NaH_{14}Al_3(PO_4)_8 \times 4H_2O]$ | gleichmäßige Bräunung, flacher Teigfladen knusprig | gleichmäßige, lockere Porung mit Einschluß größerer Luftblasen | aromatisch |
| Calciumdihydrogendiphosphat,$[CaH_2P_2O_7]$ erfindungsgemäß | gleichmäßige Bräunung, flacher Teigfladen knusprig | gleichmäßig lockere Porung | sehr aromatisch |
| Calciumdihydrogendiphosphat verunreinigt (Vergleich) | gleichmäßige Bräunung, leicht gewölbter Teigfladen knusprig | ungleichmäßige Porung mit Einschluß größerer Luftblasen | aromatisch |

**Ansprüche**

1. Verwendung von Backtriebmittel, bestehend aus einem teilneutralisierten Phosphat und Bicarbonat zur Herstellung lagerfähiger, gefrorener Teige und Teigstücke, dadurch gekennzeichnet, daß das Phosphat aus Calciumdihydrogendiphosphat mit einem Gehalt von mindestens 95 % neben Gehalten an Monocalciumphosphat und Calciummetaphosphaten besteht.

2. Verwendung nach Anspruch 1, dadurch gekennzeichnet, daß das Calciumdihydrogendiphosphat weniger als 4 %, vorzugsweise weniger als 1 % Verunreinigungen enthält.

3. Verwendung nach Anspruch 1 oder 2, dadurch gekennzeichnet, daß die Zugabemenge an Calciumdihydrogendiphosphat bezogen auf die Gesamtteigmenge 0,4 bis 1,6 % beträgt.

4. Verwendung nach einem der Ansprüche 1 bis 3, dadurch gekennzeichnet, daß Calciumdihydrogendiphosphat in Kombination mit teilneutralisierten Natrium-, Kalium- oder Calciumsalzen organischer Genußsäuren verwendet wird.

5. Verwendung nach einem der Ansprüche 1 bis 4, dadurch gekennzeichnet, daß Calciumdihydrogendiphosphat in Verbindung mit einem Lacton einer Hydroxycarbonsäure verwendet wird.

6. Verwendung nach Anspruch 4 oder 5, dadurch gekennzeichnet, daß die genannten Stoffe 5 bis 30 % des Gesamtneutralisationswertes der jeweiligen Kombination mit Calciumdihydrogendiphosphat entsprechen.

7. Verfahren zur technischen Herstellung von praktisch reinem Calciumdihydrogendiphosphat aus Monocalciumphosphat und/oder Monocalciumphosphatmonohydrat durch Kondensation in einem Reaktor unter Wärmezufuhr, dadurch gekennzeichnet, daß man den Reaktorinhalt mischt, in dünner Schicht an die Reaktorwandung drückt und anschließend die kondensierte harte Schicht wieder von der Reaktorwandung abschält und ins Innere zurückbringt und bei einer Verweilzeit von 0,5-3 Stunden den Reaktionsraum gegen einen Gasaustausch mit der Umgebung abdichtet und die Reaktion unter dem Dampfdruck des entweichenden Kondensationswassers durchführt.

8. Verfahren nach Anspruch 7, dadurch gekennzeichnet, daß die Wärme mittels eines temperierbaren Mediums durch die Reaktorwandung zugeführt wird.

9. Verfahren nach den Ansprüchen 8 oder 9, dadurch gekennzeichnet, daß man als Wärmeträger für den Reaktor Thermoöl, eine Metallschmelze oder eine Salzschmelze verwendet.

10. Verfahren nach einem der Ansprüche 7 bis 9, dadurch gekennzeichnet, daß die Reaktion kontinuierlich geführt wird und der Reaktor kontinuierlich mit Monocalciumphosphat beschickt wird und das Reaktionsprodukt kontinuierlich ausgetragen wird.

11. Verfahren nach einem der Ansprüche 7 bis 10, dadurch gekennzeichnet, daß während der Reaktion zusätzlich Wasserdampf oder Wasser eingespeist wird oder ein überhöhter Wasserdampfdruck abgelassen wird.

12. Verfahren nach einem der Ansprüche 7 bis 11, dadurch gekennzeichnet, daß Monocalciumphosphat mit einer mittleren Korngröße kleiner 1000 μm, insbesondere zwischen 50 und 500 μm, sowie einer Restfeuchte von 0,1 bis 5,0 vorzugsweise von 1,0 bis 3,0 % eingesetzt wird.

13. Verfahren nach einem der Ansprüche 7 bis 12, dadurch gekennzeichnet, daß ein Monocalciumphosphat mit einem molaren Ca/P-Verhältnis von 0,40 bis 0,60, vorzugsweise von 0,45 bis 0,55 verwendet wird.

Abb.1

Abb. 2

Abb. 3

Abb.4